# FASCICULE DE BREVET EUROPEEN

(11) **EP 4 522 472 B1**
(45) Date de publication et mention de la délivrance du brevet: **28.01.2026**
(21) Numéro de dépôt: 23725380.2
(22) Date de dépôt: 06.04.2023
(51) Int. Cl.: B60W 30/14

(54) **PROCÉDÉ ET DISPOSITIF DE RÉGULATION DE VITESSE D'UN VÉHICULE UTILISANT UN CHANGEMENT DE VITESSE DE CONSIGNE**
VERFAHREN UND VORRICHTUNG ZUR GESCHWINDIGKEITSREGELUNG EINES FAHRZEUGS UNTER VERWENDUNG EINER SOLLGESCHWINDIGKEITSÄNDERUNG.
METHOD AND DEVICE FOR CONTROLLING THE SPEED OF A VEHICLE USING A SETPOINT SPEED CHANGE.

(30) Priorité: 11.05.2022 FR 2204455
(43) Date de publication de la demande: 19.03.2025
(73) Titulaire: Stellantis Auto SAS, 78300 Poissy (FR)
(72) Inventeur: DUSI, Jacques, 77220 GRETZ ARMAINVILLIERS (FR); BRACONNIER, Jean-baptiste, 91120 PALAISEAU (FR)
(74) Mandataire: ESIP
(86) Numéro de dépôt international: PCT/FR2023/050493
(87) Numéro de publication internationale: WO 2023/218146

(56) Documents cités:
- DE-A1- 102015 000 539
- DE-A1- 102015 006 411
- DE-A1- 102019 115 001

## Description

### Domaine technique

La présente invention concerne les procédés et dispositifs de régulation de vitesse de véhicule, notamment un véhicule autonome. En particulier, la présente invention concerne l'autorisation de changer de vitesse de consigne utilisée pour réguler la vitesse du véhicule.

### Arrière-plan technologique

Certains régulateurs de vitesse de véhicule mettent en œuvre des fonctions qui sont destinées à informer le conducteur du véhicule dès qu'une nouvelle vitesse limite, différente de la vitesse de consigne courante utilisée pour réguler la vitesse du véhicule, a été obtenue.

**La nouvelle vitesse limite peut être obtenue à partir de la détection d'un panneau** indicateur de cette nouvelle vitesse limite par une caméra installée dans une partie **avant du véhicule. Cette nouvelle vitesse limite peut aussi être obtenue à partir d'une base de données cartographique stockée dans le véhicule, ou encore à partir d'une** transmission de données à travers un canal de communication.

Une nouvelle vitesse de consigne est déterminée à partir de la nouvelle vitesse limite. Typiquement, la nouvelle vitesse de consigne est égale à la nouvelle vitesse limite.

Ces fonctions peuvent ê**tre activées dès qu'une nouvelle vitesse limite est obtenue** et **avant que le véhicule n'atteigne un panneau indicateur de la nouvelle vitesse limite.** On parle alors de fonctions AISA, **de l'anglais Anticipated Intelligent Speed Adaptation, en** français adaptation de vitesse intelligente et anticipée ou ALSA, de l'anglais Anticipated Legal Speed Auto, en français vitesse réglementaire automatique et anticipée.

D'autres fonctions peuvent n'être activées que lorsque le véhicule a atteint et dépassé un panneau indicateur d'une vitesse limite. On parle alors de fonctions ISA, de l'anglais Intelligent Speed Adaptation, en français adaptation de vitesse intelligente, et LSA, de l'anglais Legal Speed Auto, en français vitesse réglementaire automatique.

Les fonctions ISA et AISA produisent une proposition de changement de vitesse de consigne passant d'une vitesse de consigne courante à la nouvelle vitesse de consigne. Le régulateur de vitesse commande l'affichage de cette proposition de changement de vitesse de consigne selon un mode d'affichage sur une IHM (Interface Homme Machine) tel qu'un écran du véhicule par exemple. Le changement de vitesse de consigne est alors effectif si le conducteur du véhicule valide cette proposition de changement de vitesse de consigne.

La fonction ISA est activée une fois que le véhicule a atteint le panneau indicateur tandis que la fonction AISA n'est active qu'entre l'instant temporel où une nouvelle vitesse de consigne est déterminée à partir d'une nouvelle vitesse limite et l'instant temporel où le véhicule passe devant le panneau indicateur de la nouvelle vitesse limite.

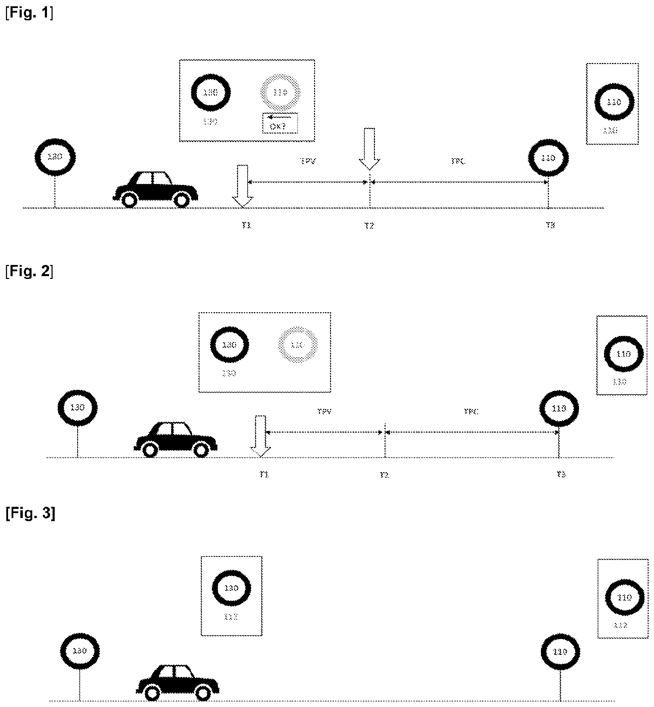

La figure 1 illustre schématiquement un diagramme temporel représentant le fonctionnement d'une fonction AISA selon l'état de l'art.

Selon cet exemple, le véhicule circule sur une route à une vitesse de 130 km/h régulée selon une vitesse de consigne courante de 130 km/h. Une nouvelle vitesse de consigne de 110 km/h est déterminée à partir d'une nouvelle vitesse limite obtenue.

A un instant temporel T1, le régulateur de vitesse produit une proposition de changement de vitesse de consigne passant de 130km/h à 110 km/h. Cette proposition est affichée selon un mode d'affichage. Selon l'exemple, ce mode d'affichage peut comprendre une zone d'affichage qui affiche des informations présentant la nouvelle vitesse limite (110 km/h), la vitesse de consigne courante du véhicule (130 km/h) et une zone d'interfaçage (portant l'inscription Ok ?) proposant au conducteur du véhicule de valider la nouvelle vitesse de consigne (110 km/h). A un instant temporel T2, le conducteur valide cette proposition et le régulateur de vitesse déclenche une décélération du véhicule pour que sa vitesse atteigne la nouvelle vitesse de consigne. Une accélération peut être déclenchée si la nouvelle vitesse de consigne est supérieure à la vitesse de consigne courante.

L'intervalle de temps TPV défini entre les instants temporels T1 et T2 correspond au délai mis par le conducteur pour valider la proposition de changement de vitesse de consigne. L'intervalle de temps TPC correspond à la durée de décélération (ou d'accélération selon les situations) du véhicule. Cet intervalle de temps TPC débute à l'instant temporel T2 et se termine à l'instant temporel T3 correspondant au passage du véhicule devant le panneau indicateur de la nouvelle vitesse limite. L'intervalle de temps TPC peut se prolonger au-delà de l'instant temporel T3 lorsque l'intervalle de temps TPV est trop important, c'est-à-dire que la vitesse du véhicule est supérieure à la nouvelle vitesse de consigne lorsque le véhicule passe devant le panneau indicateur.

Le fonctionnement de la fonction LSA est similaire à celui de la fonction ISA et le fonctionnement de la fonction ALSA est similaire à celui de la fonction AISA.

La seule différence de fonctionnement est que dans le cas de fonction LSA ou ALSA l'instant temporel T2 est figé et ne dépend donc pas de l'action du conducteur pour valider la proposition de changement de vitesse de consigne. L'intervalle de temps TPV correspond alors au délai de réaction du régulateur de vitesse pour déclencher une décélération (ou accélération) du véhicule. Selon les fonctions LSA et ALSA, le changement de vitesse de consigne est automatique dès qu'une nouvelle vitesse de consigne est déterminée telle que illustrée sur la figure 2. On peut noter qu'une variante des fonctions LSA et ALSA est d'afficher une présentation du changement de vitesse de consigne. Sur la figure 2, cette présentation (fonction ALSA) comprend deux zones d'affichage : l'une affichant la vitesse de consigne courante (130 km/h et la vitesse du véhicule) ; l'autre affichant la nouvelle vitesse de consigne (110 km/h).

Un régulateur de vitesse mettant en œuvre les fonctions ISA, LSA, AISA et/ou ALSA peut ainsi proposer et/ou effectuer automatiquement des changements de vitesse de consigne.

Pour la fonction AISA, il est connu que si la différence entre la vitesse de consigne courante et la nouvelle vitesse de consigne est inférieure à une valeur seuil prédéfinie, appelée par la suite marge de vitesse, alors la proposition de changement de vitesse de

### consigne n'est pas produite.

**Selon l'exemple illustré à la** **figure 3**, un véhicule circule à une vitesse régulée de 112 km/h alors que la vitesse limite est de 130 km/h. Une nouvelle vitesse limite de 110 km/h est obtenue, permettant de déterminer une nouvelle vitesse de consigne de 110 km/h. Si la marge de vitesse est fixée à 5km/h, le régulateur de vitesse ne propose pas de changement de vitesse de consigne car la différence entre la vitesse de consigne courante (112 km/h) et la nouvelle vitesse de consigne (110 km/h) est inférieure à 5 km/h.

Il est également connu que pour la fonction ALSA, aucun changement de vitesse de **consigne n'est effectué dans** une situation similaire à celle de la figure 3.

Toutefois, il est nécessaire, dans la situation de la figure 3, qu'un changement de vitesse de consigne soit proposé (fonction AISA) ou effectué automatiquement (fonction ALSA) **alors que ce n'est pas le cas dans la mise en œuvre de ces fonctions par les** régulateurs de vitesse actuels. En effet, la situation de la figure 3 peut correspondre à un conducteur qui aurait fixé une vitesse de consigne (112 km/h) depuis longtemps bien en dessous de la vitesse de consigne courante (130 km/h) pensant ne plus être obligé de se préoccuper à nouveau de régler cette vitesse de consigne.

**Par ailleurs, il est impératif qu'aucune proposition de changement de vitesse de consigne ou qu'aucun changement de vitesse de consigne** automatique ne soit effectif si le conducteur du véhicule vient de modifier très récemment la vitesse de consigne manuellement **à l'approche d'un panneau indicateur d'une nouvelle vitesse limite.**

Le document DE102025006411, par exemple, décrit un procédé de régulation de **vitesse d'un véhicule comprenant un changement de** vitesse de consigne.

### Résumé de la présente invention

**Un objet de la présente invention est de résoudre au moins l'un des** inconvénients de **l'arrière**-plan technologique décrit précédemment.

Un autre objet de la présente invention est de **modifier la mise en œuvre** des fonctions AISA, ALSA, ISA et/ou LSA en vérifiant, pendant un intervalle de temps, si la vitesse de consigne courante d'un véhicule est modifiée par un conducteur de ce véhicule et si une différence entre la vitesse de consigne courante et la nouvelle vitesse de consigne est inférieure à une marge de vitesse ; si la vitesse de consigne courante est modifiée pendant l'intervalle de temps et si la différence est inférieure à la marge de vitesse alors le changement de vitesse de consigne n'est pas autorisé, c'est-à-dire qu'aucun changement de vitesse de consigne n'est effectué automatiquement (fonctions ALSA ou LSA) et qu'aucune proposition de changement de vitesse de consigne n'est produite (fonctions AISA, ISA).

La présente invention permet donc de remédier aux inconvénients de la mise en œuvre actuelle des fonctions AISA, ALSA, ISA et/ou LSA en vérifiant, d'une part, si la vitesse de consigne courante d'un véhicule est modifiée par un conducteur de ce véhicule pendant un intervalle de temps et si, d'autre part, pendant cet intervalle de temps, la vitesse de ce véhicule est proche de la nouvelle vitesse de consigne à une marge de vitesse près. Si ces deux conditions sont vérifiées alors la vitesse de consigne courante n'est pas modifiée par les fonctions ALSA, AISA, ISA et/ou LSA.

A cet effet, la présente invention concerne un procédé de régulation de vitesse d'un véhicule comprenant un changement de vitesse de consigne passant d'une vitesse de consigne courante à une nouvelle vitesse de consigne différente de la vitesse de consigne courante et un déclenchement d'une décélération ou d'une accélération du véhicule de la vitesse de consigne courante jusqu'à la nouvelle vitesse de consigne. Le procédé est caractérisé en ce qu'il comprend en outre une vérification, pendant un intervalle de temps, d'une modification de la vitesse de consigne courante par un conducteur du véhicule et d'une comparaison d'une différence entre la vitesse de consigne courante et la nouvelle vitesse de consigne, et une marge de vitesse ; si la vitesse de consigne courante est modifiée pendant l'intervalle de temps et si la différence est inférieure à la marge de vitesse pendant l'intervalle de temps, alors le changement de vitesse de consigne n'est pas autorisé ; et une décélération ou une accélération du véhicule est déclenchée si le changement de vitesse de consigne est autorisé.

Selon une variante, l'intervalle de temps est antérieur à un instant temporel défini par un passage du véhicule devant un panneau indicateur de la nouvelle vitesse de consigne.

Selon une variante, le changement de vitesse de consigne comprend une production d'une proposition du changement de vitesse de consigne et une validation par un conducteur du véhicule de ladite proposition préalablement à un déclenchement du changement de la vitesse de consigne.

Selon une variante, le changement de vitesse de consigne comprend une présentation du changement de vitesse de consigne.

Selon une variante, l'intervalle de temps est antérieur à un instant temporel marquant le début d'un affichage de la proposition ou de la présentation du changement de la vitesse de consigne.

Selon une variante, l'intervalle de temps est postérieur à un instant temporel défini par un passage du véhicule devant un panneau indicateur de la nouvelle vitesse de consigne.

Selon un deuxième aspect, la présente invention concerne un dispositif de régulation de vitesse d'un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 8 annexées, sur lesquelles :
[Fig. 1] illustre un diagramme temporel représentant le fonctionnement d'une fonction AISA selon l'état de l'art ;
[Fig. 2] illustre un diagramme temporel représentant le fonctionnement d'une fonction ALSA selon l'état de l'art ;
[Fig. 3] illustre une situation où un changement de vitesse de consigne n'est pas proposé par une fonction AISA ni effectué automatiquement par une fonction ALSA de l'état de l'art ;
[Fig. 4] illustre schématiquement un véhicule selon un exemple de réalisation particulier et non limitatif de la présente invention ;
[Fig. 5] illustre schématiquement un dispositif configuré pour réguler la vitesse d'un véhicule, selon un exemple de réalisation particulier et non limitatif de la présente invention ;
[Fig. 6] illustre une situation de production d'une proposition de changement de vitesse de consigne par une fonction AISA selon un exemple de réalisation non limitatif de la présente invention ;
[Fig. 7] illustre une situation dans laquelle un changement de vitesse de consigne n'est pas autorisé selon un exemple de réalisation non limitatif de la présente invention ; et
[Fig. 8] illustre un organigramme des différentes étapes d'un procédé de régulation de la vitesse d'un véhicule, selon un exemple de réalisation particulier et non limitatif de la présente invention.

### Description des exemples de réalisation

Un procédé et un dispositif de régulation de la vitesse d'un véhicule vont maintenant être décrits dans ce qui va suivre en référence conjointement aux figures 1 à 8. Des mêmes éléments sont identifiés avec des mêmes signes de référence tout au long de la description qui va suivre.

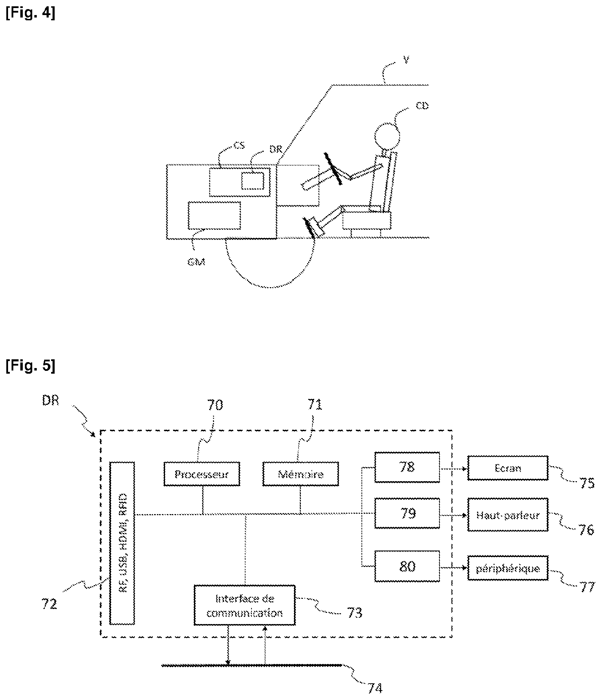

La figure 4 illustre schématiquement un véhicule V selon un exemple de réalisation particulier et non limitatif de la présente invention.

La présente invention a notamment pour but de proposer un procédé et un dispositif de régulation de vitesse DR destiné à permettre une régulation de vitesse du véhicule V en présence de limitations de vitesse variables.

Dans ce qui suit, on considère, à titre d'exemple non limitatif, que le véhicule V est de type automobile. Il s'agit par exemple d'une voiture. Mais la présente invention n'est pas limitée à ce type de véhicule. Elle concerne en effet tout type de véhicule terrestre pouvant circuler sur des voies de circulation faisant l'objet de limitations de vitesses variables. Ainsi, elle concerne également et non limitativement les véhicules utilitaires, les motocyclettes, les cars, et les camions. Par ailleurs, on considère dans ce qui suit, à titre d'exemple non limitatif, que le véhicule V comprend un groupe motopropulseur (ou GMP) GM de type conventionnel, c'est-à-dire ne comportant comme source de couple qu'un moteur thermique. Mais ce véhicule pourrait comprendre un groupe motopropulseur de type hybride, c'est-à-dire comportant au moins un moteur thermique et au moins une machine auxiliaire capable de fournir du couple à partir de l'énergie stockée dans des moyens de stockage d'énergie (comme par exemple un moteur électrique ou à air comprimé), ou de type tout électrique, c'est-à-dire comportant au moins un moteur électrique.

On a schématiquement représenté sur la figure 4 le véhicule V comprenant le groupe motopropulseur GM (couplé au moins à une pédale d'accélérateur et à une pédale de frein), un calculateur de supervision CS propre à superviser le fonctionnement du groupe motopropulseur GM, et le dispositif de régulation de vitesse DR selon la présente invention.

Par exemple, le véhicule V peut comprendre un réseau de communication embarqué, éventuellement de type multiplexé, et permettant à des équipements électroniques embarqués (et notamment le calculateur de supervision CS et l'ordinateur de bord), qui sont connectés à lui, d'échanger des informations et instructions. Ainsi, le calculateur de supervision CS peut contrôler le groupe motopropulseur GM en lui transmettant des instructions via le réseau de communication embarqué.

Le dispositif de régulation de vitesse DR est chargé de contrôler la régulation de vitesse du véhicule V au moyen de vitesse de consigne sélectionnées par le conducteur CD ou bien qu'il a déterminées, éventuellement en fonction d'instructions fournies par le conducteur CD.

Dans l'exemple non limitatif illustré sur la figure 4, le dispositif de régulation de vitesse DR fait partie du calculateur de supervision CS. Mais cela n'est pas obligatoire. Ce dispositif de régulation de vitesse DR pourrait en effet être un équipement indépendant, éventuellement couplé au calculateur de supervision CS.

La figure 5 illustre schématiquement un dispositif de régulation DR indépendant selon un exemple de réalisation particulier et non limitatif de la présente invention.

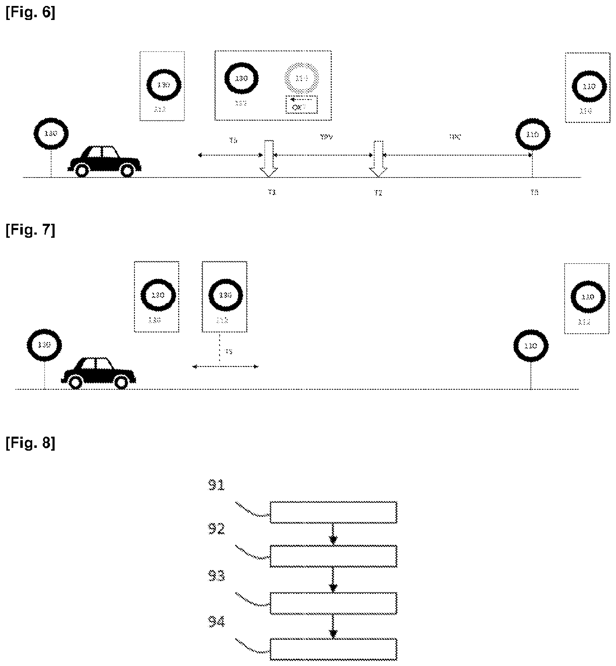

Le dispositif DR est par exemple configuré pour la mise en œuvre des opérations décrites en regard des figures 6 et 7 et/ou des étapes du procédé décrit en regard de la figure 8. Des exemples d'un tel dispositif DR comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif DR, individuellement ou en combinaison, peuvent être intégrés dans un unique circuit intégré, dans plusieurs circuits intégrés, et/ou dans des composants discrets. Le dispositif DR peut être réalisé sous la forme de circuits électroniques ou de modules logiciels (ou informatiques) ou encore d'une combinaison de circuits électroniques et de modules logiciels.

Le dispositif DR comprend un (ou plusieurs) processeur(s) 70 configurés pour exécuter des instructions pour la réalisation des étapes du procédé et/ou pour l'exécution des instructions du ou des logiciels embarqués dans le dispositif DR. Le processeur 70 peut inclure de la mémoire intégrée, une interface d'entrée/sortie, et différents circuits connus de l'homme du métier. Le dispositif DR comprend en outre au moins une mémoire 71 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 71.

Selon différents exemples de réalisation particuliers et non limitatifs, le dispositif DR est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif DR comprend un bloc 72 d'éléments d'interface pour communiquer avec des dispositifs externes, par exemple un serveur distant ou le « cloud », d'autres nœuds du réseau ad hoc. Les éléments d'interface du bloc 72 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif DR via l'interface du bloc 72 en utilisant un réseau Wi-Fi^{®} tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif DR comprend une interface de communication 73 qui permet d'établir une communication avec d'autres dispositifs (tels que d'autres calculateurs du système embarqué et notamment le calculateur de supervision CS) via un canal de communication 74. L'interface de communication 73 correspond par exemple à un transmetteur configuré pour transmettre et recevoir des informations et/ou des données via le canal de communication 74. L'interface de communication 73 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif DR peut fournir des signaux de sortie à un ou plusieurs dispositifs externes, tels qu'un écran d'affichage 75, tactile ou non, un ou des haut-parleurs 76 et/ou d'autres périphériques 77 tel qu'un dispositif d'affichage tête haute via respectivement des interfaces de sortie 78, 79 et 80.

Selon une variante, l'un ou l'autre des dispositifs externes est intégré au dispositif DR.

Le dispositif de régulation de vitesse DR est activé par le conducteur CD du véhicule V au moyen d'un organe de commande, éventuellement dédié, ou d'une commande vocale dédiée, ou encore d'une sélection d'une option dans un menu affiché sur un écran du véhicule V (par exemple celui du combiné central installé dans la planche de bord du véhicule). L'organe de commande peut, par exemple, être une manette (ou un commodo), éventuellement dédié.

Lorsque le dispositif de régulation DR est activé, dans une première opération, le dispositif de régulation DR obtient une nouvelle vitesse limite.

Selon une variante, une nouvelle vitesse limite peut être obtenue à partir de la détection d'un panneau indicateur de limitation de vitesse. Cette détection peut, par exemple, être mise en œuvre par un capteur situé à l'avant du véhicule V. Ce capteur peut aussi fournir une position PV du véhicule par rapport au véhicule V.

Selon une variante, une nouvelle vitesse limite peut être obtenue à partir d'une information cartographique qui indique la position géographique d'un panneau indicateur de cette nouvelle vitesse limite.

Selon une variante, cette information cartographique peut être obtenue à partir de la mémoire 71 du dispositif de régulation DR ou d'une base de données cartographiques stockées dans la mémoire 71. L'information cartographique est définie en fonction de la position géographique du véhicule V.

Selon une variante, cette information cartographique peut aussi être obtenue à partir d'un réseau de communication.

Dans une deuxième opération, le dispositif de régulation DR vérifie pendant un intervalle de temps, si la vitesse de consigne courante est (a été) modifiée par un conducteur du véhicule V et vérifie, pendant cet intervalle de temps, une comparaison de la différence D entre la vitesse de consigne courante et la nouvelle vitesse de consigne, et une marge de vitesse MV.

Selon une variante, l'intervalle de temps est l'intervalle TS.

Selon une variante, l'intervalle de temps est l'intervalle TS+TPV.

Selon une variante, la marge de vitesse MV peut être égale à 5km/h.

Dans une troisième opération, si la vitesse de consigne courante est (a été) modifiée pendant l'intervalle de temps et si la différence D est inférieure à la marge de vitesse MV pendant l'intervalle de temps, alors le changement de vitesse de consigne n'est pas autorisé.

Selon une variante, l'intervalle de temps peut être antérieur à un instant temporel T3 défini par un passage du véhicule V devant un panneau indicateur de la nouvelle vitesse de consigne.

Selon cette variante, le changement de vitesse de consigne peut être mis en œuvre par une fonction AISA, c'est-à-dire qu'il comprend une production d'une proposition du changement de vitesse de consigne et une validation par un conducteur du véhicule de ladite proposition préalablement au déclenchement du changement de la vitesse de consigne.

Selon cette variante, le changement de vitesse de consigne peut-être mis en œuvre par une fonction ALSA, c'est-à-dire que le changement de vitesse de consigne est automatique et il comprend une présentation du changement de vitesse de consigne.

Selon une variante, l'intervalle de temps peut être postérieur à l'instant temporel T3.

Selon cette variante, le changement de vitesse de consigne est mis en œuvre par une fonction ISA, c'est-à-dire qu'il comprend une production d'une proposition du changement de vitesse de consigne et une validation par un conducteur du véhicule de ladite proposition préalablement au déclenchement du changement de la vitesse de consigne.

Selon cette variante, le changement de vitesse de consigne est mis en œuvre par une fonction LSA, c'est-à-dire que le changement de vitesse de consigne est automatique et il comprend une présentation du changement de vitesse de consigne.

Selon une variante, l'intervalle de temps est antérieur à un instant temporel T1 marquant le début d'un affichage de la proposition ou de la présentation du changement de la vitesse de consigne.

Dans une quatrième opération, le dispositif de régulation DR déclenche une décélération ou une accélération du véhicule si le changement de vitesse de consigne est autorisé.

La figure 6 illustre une situation de production d'une proposition de changement de vitesse de consigne par une fonction AISA selon un exemple de réalisation non limitatif de la présente invention.

Selon cet exemple, la vitesse du véhicule V est régulée selon une vitesse de consigne courante de 112 km/h alors que la vitesse limite est de 130 km/h. Le dispositif de régulation DR obtient une nouvelle vitesse limite égale à 110 km/h (nouvelle vitesse de consigne). Pendant l'intervalle de temps, par exemple TS, positionné antérieurement à l'intervalle de temps TPV, le conducteur CD n'a pas modifié la vitesse de consigne courante (112 km/h). Ainsi, bien que la différence entre la vitesse de consigne courante (112 km/h) et la nouvelle vitesse de consigne (110 km/h) soit inférieure à la marge de vitesse MV (par exemple 5km/h), le changement de vitesse de consigne reste autorisé et la fonction AISA produit une proposition de changement de vitesse de consigne car le conducteur CD n'a pas modifié la vitesse de consigne courante pendant l'intervalle de temps TS. Une situation similaire peut se produire avec un changement de vitesse de consigne mis en œuvre par une fonction ALSA, ISA ou encore LSA.

La figure 7 illustre une situation dans laquelle un changement de vitesse de consigne n'est pas autorisé selon un exemple de réalisation non limitatif de la présente invention.

Selon cet exemple, la vitesse du véhicule V est régulée selon une vitesse de consigne courante de 130 km/h. Le dispositif de régulation DR obtient une nouvelle vitesse limite égale à 110 km/h (nouvelle vitesse de consigne). Pendant l'intervalle de temps, par exemple TS, le conducteur CD a modifié la vitesse de consigne courante (112 km/h). Le changement de vitesse de consigne n'est pas autorisé car la différence entre la vitesse de consigne courante (112 km/h) et la nouvelle vitesse de consigne (110 km/h) est inférieure à la marge de vitesse MV (5km/h) et le conducteur CD a modifié la vitesse de consigne courante pendant l'intervalle de temps TS. Une situation similaire peut se produire avec un changement de vitesse de consigne mis en œuvre par une fonction ALSA, ISA ou encore LSA.

La figure 8 illustre un organigramme des différentes étapes d'un procédé de régulation de vitesse d'un véhicule, selon un exemple de réalisation particulier et non limitatif de la présente invention. Le procédé est par exemple mis en œuvre par un dispositif embarqué dans le véhicule V ou par le dispositif DR de la figure 5.

Dans une première étape 91, une nouvelle vitesse limite est obtenue à partir de laquelle une nouvelle vitesse de consigne est déterminée.

Dans une deuxième étape 92, une modification de la vitesse de consigne courante est vérifiée pendant un intervalle de temps et, pendant cet intervalle de temps, la différence entre la vitesse de consigne courante et la nouvelle vitesse de consigne est comparée à une marge de vitesse.

Dans une troisième étape 93, si la vitesse de consigne courante est (a été) modifiée pendant l'intervalle de temps et si la différence est inférieure à la marge de vitesse pendant l'intervalle de temps, alors le changement de vitesse de consigne n'est pas autorisé.

Dans une quatrième étape 94, une décélération ou une accélération du véhicule est déclenchée si le changement de vitesse de consigne est autorisé.

Selon une variante, les variantes et exemples des opérations décrits en relation avec les figures 4 à 7 s'appliquent aux étapes du procédé de la figure 8.

Le procédé de régulation de vitesse d'un véhicule peut inclure des étapes secondaires. Il en est de même du dispositif configuré pour la mise en œuvre du procédé.

La présente invention concerne également un véhicule, par exemple automobile ou plus généralement un véhicule autonome à moteur terrestre, comprenant le dispositif DR de la figure 5.

## Revendications

1. Procédé de régulation de vitesse d'un véhicule comprenant un changement de vitesse de consigne passant d'une vitesse de consigne courante à une nouvelle vitesse de consigne différente de la vitesse de consigne courante et un déclenchement (94) d'une décélération ou d'une accélération du véhicule de la vitesse de consigne courante jusqu'à la nouvelle vitesse de consigne, **caractérisé en ce que** le procédé comprend en outre les étapes suivantes :
- vérification (92), pendant un intervalle de temps, d'une modification de la vitesse de consigne courante par un conducteur du véhicule et d'une comparaison d'une différence entre la vitesse de consigne courante et la nouvelle vitesse de consigne, et une marge de vitesse;
- si la vitesse de consigne courante est modifiée pendant l'intervalle de temps et si la différence est inférieure à la marge de vitesse pendant l'intervalle de temps, alors le changement de vitesse de consigne n'est pas autorisé (93) ; et
- une décélération ou une accélération du véhicule est déclenchée (94) si le changement de vitesse de consigne est autorisé.

2. Procédé selon la revendication 1, dans lequel l'intervalle de temps est antérieur à un instant temporel défini par un passage du véhicule devant un panneau indicateur de la nouvelle vitesse de consigne.

3. Procédé selon la revendication 1, dans lequel l'intervalle de temps est postérieur à un instant temporel défini par un passage du véhicule devant un panneau indicateur de la nouvelle vitesse de consigne.

4. Procédé selon la revendication 2 ou 3, dans lequel le changement de vitesse de consigne comprend une production d'une proposition du changement de vitesse de consigne et une validation par un conducteur du véhicule de ladite proposition préalablement à un déclenchement du changement de la vitesse de consigne.

5. Procédé selon la revendication 2 ou 3, dans lequel le changement de vitesse de consigne comprend une présentation du changement de vitesse de consigne.

6. Procédé selon l'une des revendications 4 ou 5, dans lequel l'intervalle de temps est antérieur à un instant temporel marquant le début d'un affichage de la proposition ou de la présentation du changement de la vitesse de consigne.

7. Programme d'ordinateur comportant des instructions mettant en œuvre le procédé selon l'une quelconque des revendications précédentes, lorsque ces instructions sont exécutées par un processeur.

8. Support d'enregistrement lisible par un ordinateur sur lequel est enregistré un programme d'ordinateur selon la revendication 7.

9. Dispositif (DR) de régulation de vitesse d'un véhicule, ledit dispositif (DR) comprenant une mémoire (71) associée à au moins un processeur (70) configuré pour la mise en œuvre des étapes du procédé selon l'une quelconque des revendications 1 à 6.

10. Véhicule (V) comprenant le dispositif (DR) selon la revendication 9.

## Patentansprüche

1. Ein Verfahren zur Geschwindigkeitsregelung eines Fahrzeugs umfasst eine Änderung der Sollgeschwindigkeit von der aktuellen Sollgeschwindigkeit auf eine neue, von der aktuellen Sollgeschwindigkeit abweichende Sollgeschwindigkeit sowie das Auslösen (94) einer Verzögerung oder Beschleunigung des Fahrzeugs von der aktuellen auf die neue Sollgeschwindigkeit. Das Verfahren umfasst ferner die folgenden Schritte:
- Überprüfung (92) einer Änderung der aktuellen Sollgeschwindigkeit durch den Fahrzeugführer innerhalb eines Zeitintervalls und Vergleich der Differenz zwischen der aktuellen Sollgeschwindigkeit und der neuen Sollgeschwindigkeit mit einer Geschwindigkeitsreserve;
- falls die aktuelle Sollgeschwindigkeit innerhalb des Zeitintervalls geändert wird und die Differenz innerhalb des Zeitintervalls kleiner als die Geschwindigkeitsreserve ist, ist die Änderung der Sollgeschwindigkeit nicht zulässig (93); und
- Auslösen einer Verzögerung oder Beschleunigung des Fahrzeugs (94), falls die Änderung der Sollgeschwindigkeit zulässig ist.

2. Verfahren nach Anspruch 1, wobei das Zeitintervall vor einem Zeitpunkt liegt, der dadurch definiert ist, dass das Fahrzeug an einem Schild vorbeifährt, das die neue eingestellte Geschwindigkeit anzeigt.

3. Verfahren nach Anspruch 1, wobei das Zeitintervall nach einem Zeitpunkt liegt, der dadurch definiert ist, dass das Fahrzeug an einem Schild vorbeifährt, das die neue eingestellte Geschwindigkeit anzeigt.

4. Verfahren nach Anspruch 2 oder 3, wobei die Änderung der Sollgeschwindigkeit die Erstellung eines Vorschlags zur Änderung der Sollgeschwindigkeit und die Bestätigung dieses Vorschlags durch einen Fahrzeugführer vor Auslösung der Änderung der Sollgeschwindigkeit umfasst.

5. Verfahren nach Anspruch 2 oder 3, wobei die Sollwertdrehzahländerung eine Darstellung der Sollwertdrehzahländerung beinhaltet.

6. Verfahren nach einem der Ansprüche 4 oder 5, wobei das Zeitintervall vor einem Zeitpunkt liegt, der den Beginn der Anzeige des Vorschlags oder der Präsentation der Änderung der eingestellten Geschwindigkeit markiert.

7. Computerprogramm mit Anweisungen, die das Verfahren gemäß einem der vorhergehenden Ansprüche implementieren, wenn diese Anweisungen von einem Prozessor ausgeführt werden.

8. Computerlesbares Aufzeichnungsmedium, auf dem ein Computerprogramm nach Anspruch 7 aufgezeichnet ist.

9. Geschwindigkeitsregelvorrichtung (DR) für Fahrzeuge, wobei die DR einen Speicher (71) umfasst, der mit mindestens einem Prozessor (70) verbunden ist, der für die Durchführung der Verfahrensschritte gemäß einem der Ansprüche 1 bis 6 konfiguriert ist.

10. Fahrzeug (V) umfassend die Vorrichtung (DR) nach Anspruch 9.

## Claims

1. A method for regulating the speed of a vehicle comprising a change in the set speed from a current set speed to a new set speed different from the current set speed and a triggering (94) of a deceleration or acceleration of the vehicle from the current set speed to the new set speed, **characterized in that** the method further comprises the following steps:
- verification (92), during a time interval, of a change in the current set speed by a driver of the vehicle and a comparison of a difference between the current set speed and the new set speed, and a speed margin;
- if the current set speed is changed during the time interval and if the difference is less than the speed margin during the time interval, then the change in the set speed is not permitted (93); and
- a deceleration or acceleration of the vehicle is triggered (94) if the change in the set speed is permitted.

2. A method according to claim 1, wherein the time interval is prior to a time instant defined by the vehicle passing in front of a sign indicating the new set speed.

3. A method according to claim 1, wherein the time interval is subsequent to a time instant defined by the vehicle passing in front of a sign indicating the new set speed.

4. Method according to claim 2 or 3, wherein the change of set speed includes a production of a proposal for the change of set speed and a validation by a driver of the vehicle of said proposal prior to triggering the change of set speed.

5. A method according to claim 2 or 3, wherein the setpoint speed change includes a presentation of the setpoint speed change.

6. A method according to any one of claims 4 or 5, wherein the time interval is prior to a time instant marking the start of a display of the proposal or presentation of the change in the set speed.

7. Computer program comprising instructions implementing the method according to any one of the preceding claims, when such instructions are executed by a processor.

8. Computer-readable recording medium on which a computer program according to claim 7 is recorded.

9. Vehicle speed control device (DR), said device (DR) comprising a memory (71) associated with at least one processor (70) configured for the implementation of the steps of the method according to any one of claims 1 to 6.

10. Vehicle (V) comprising the device (DR) according to claim 9.
